# EUROPEAN PATENT SPECIFICATION

(11) **EP 1 736 276 B1**
(45) Date of publication and mention of the grant of the patent: **27.08.2008**
(21) Application number: 06115513.1
(22) Date of filing: 15.06.2006
(51) Int. Cl.: B23Q 7/00

(54) **Apparatus and method for handling metal bars in a bar cutting plant**
Vorrichtung und Verfahren zum Bewegen von Stangen in einer Schneidanlage
Appareil et procédé de manutention des barres métalliques dans une installation de découpage

(30) Priority: 21.06.2005 IT TO20050433
(43) Date of publication of application: 27.12.2006
(73) Proprietor: OSCAM S.p.A., 10127 Torino (IT)
(72) Inventor: Peruzzo, Stefano, 10127 Torino (IT)
(74) Representative: Notaro, Giancarlo

(56) References cited:
- GB-A- 1 022 763

## Description

The present invention relates to plants of the type indicated in the pre-characterising portion of claim 1, i.e. plants for cutting metal bars, particularly bars for concrete reinforcement, which plants are provided with at least one bar collecting magazine for the bars to be cut, a cutting apparatus for cutting the bars at a measured length, and a unit for feeding the bars from the magazine to the measuring and cutting apparatus.

At present, in the plants for cutting metal bars, the cutting cycle begins with feeding and counting the bars to be used, which are taken from a respective magazine. In the cutting plants of greater dimensions, the bar collecting magazine for the bars which are to be handled is usually comprised of a number of stepped supports arranged at different levels, typically in the number of two or three steps, located on one side, or both sides, of a bar feeding line. This feeding line, provided with motorized rollers, then feeds the bars to the bar measuring and cutting apparatus. The steps are generally more than one, in order to keep bars of different diameter and length separate from each other. In the known conventional solutions, when the cutting apparatus must be supplied with bars, the bars are taken and counted manually by an operator and then caused to slide on inclined tables or levers to a preloading apparatus which, when necessary, unloads the bars on the feeding line.

The need of performing the above-mentioned operation of counting and loading the bars automatically is increasingly felt. However, a major problem comes from that on the bar collecting magazines entire bundles of bars are discharged, which are often more than two tons in weight. These bundles may contain even a few hundreds of bars, which may be entangled with each other, which greatly complicates the task of automatically picking up bars exactly in the number required.

Known is from GB-A-1022763 an apparatus generally of the type indicated in the pre-characterising portion of claim 1, however intended for sorting and delivering elongated magnetisable components, such as push rods for internal combustion engines, to further handling. In such a known apparatus the bundle of push rods to be picked up is loaded onto a support platform which is downwardly inclined as a hopper towards a pick up drum, and a vibrator is attached to the underside of the platform to direct the rods towards the surface of the drum. Due to the inclination of the support platform, the entire heavy bundle of push rods is urged against the pick up device, with a risk to negatively affect proper operation thereof.

The object of the present invention is that of solving the above-mentioned problem.

The idea which is at the basis of the present invention is that to disentangle and widen the bundle of bars before carrying out the operation of picking up and counting the bars. Putting this idea into practice, however, is not a simple problem, due to the great number of bars in one bundle, the high degree of entanglement of the bars and also the fact that different bundles are composed of bars having different diameters and lengths, and hence different mechanical properties. Furthermore, the bars, particularly those of smaller diameter, are also flexible, which does not render the disentangling operation easy.

In order to overcome all the above-mentioned difficulties, the invention provides an apparatus and a method according to claim 1 and claim 21.

As it clearly appears, the apparatus and method according to the invention provides for the use of means for imparting a vibration, i.n order to disentangle the bundles of bars. The bars, located on a generally horizontal vibrating surface, begin to oscillate, so that the bundle is disentangled and widened, given that the bars tend to assume the configuration of minimum potential energy. In this manner, it is then much simpler to pick up and count the bars by any automatic means, such as chain conveyers, augers, cams, magnets, gripping tools, screws with variable pitch, paddled wheels, notched wheels or the like, so that a pre-determined number of bars can be loaded on the apparatus for feeding the bars to the cutting plant.

The advantages in terms of increase of productivity and reduction of costs of operation of the plant which derive from the automatization of the operations for picking up and counting the bars located on one or more magazines are clearly apparent. It is possible to have a plant including also one magazine of a conventional type for those particular types of bundles of bars which are particularly difficult to be disentangled. For these bundles, the conventional system to pick and to count the bars will be used, while applying the automated apparatus to the other cases.

It is still to be noted that with the cutting plant there are often associated or even integrated apparatus for bending the bars. The invention is applicable also to systems for feeding the bars to these bending apparatus, as well as to plants which carry out both cutting and bending.

Further features and advantages of the invention will become apparent from the description which follows with reference to the annexed drawings, given ? of no limiting example in which:
- figure 1 is a diagrammatic prospective view of a magazine in a plant according to the invention,
- figures 2, 3 are cross-sectional diagrammatic views of the magazine of figure 1, in two different operative conditions,
- figure 4 is a cross-sectional view as those of figures 2, 3 which shows the operation of counting and unloading the bars on a system for feeding the bars to an apparatus located downstream of the vibrating device, particularly a cutting apparatus, and
- figure 5 shows a variant of the solution shown in figure 4.

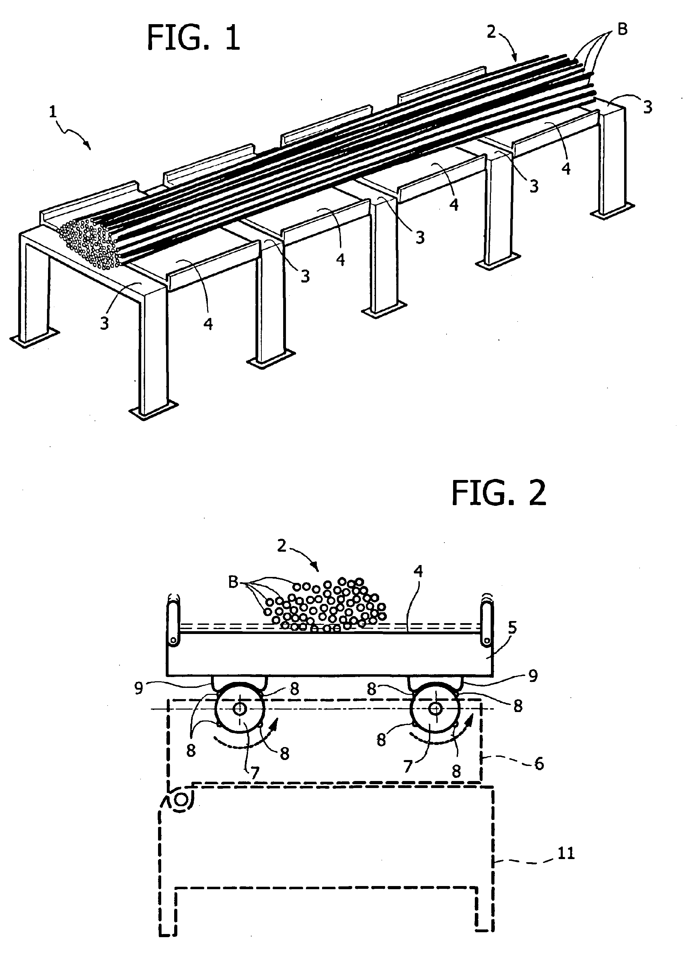

In figure 1, reference numeral 1 generally designates a magazine for a bundle 2 of bars B of metal. In the illustrated example, a magazine comprises a plurality of cross-members 3, forming part of the supporting frame of the magazine, which are parallel and spaced apart from each other. Between each pair of adjacent cross-members is provided a horizontal wall 4 defining a support table for the bars B which is slightly elevated with respect to the upper surface of the cross members 3. The wall 4 forms part of a structure 5 which is mounted on a respective supporting structure 6 (shown in dotted lines in figure 2) having the possibility to undergo small oscillations both in the vertical direction and in the horizontal direction transverse with respect to the longitudinal direction of the bars, or, if necessary, more complicated oscillating movements along the plane defined by the two above-mentioned directions. On the structure 6 there are provided motorized rollers 7 provided with ridges 8 which are to interfere with appendages 9 projecting downwardly from the structure 5, so that the rotation of rollers 7 causes the structure to undergo a vibrating and quaking movement.

Naturally, the structure illustrated herein for the vibrating means which are to generate the above-mentioned vibrating movement is given purely by way of example, since it is clearly apparent to the skilled man in the art that any type of device capable of transmitting an identical or similar movement to the structure 5 in order to cause the "flattening" of the bundle of bars B can be used.

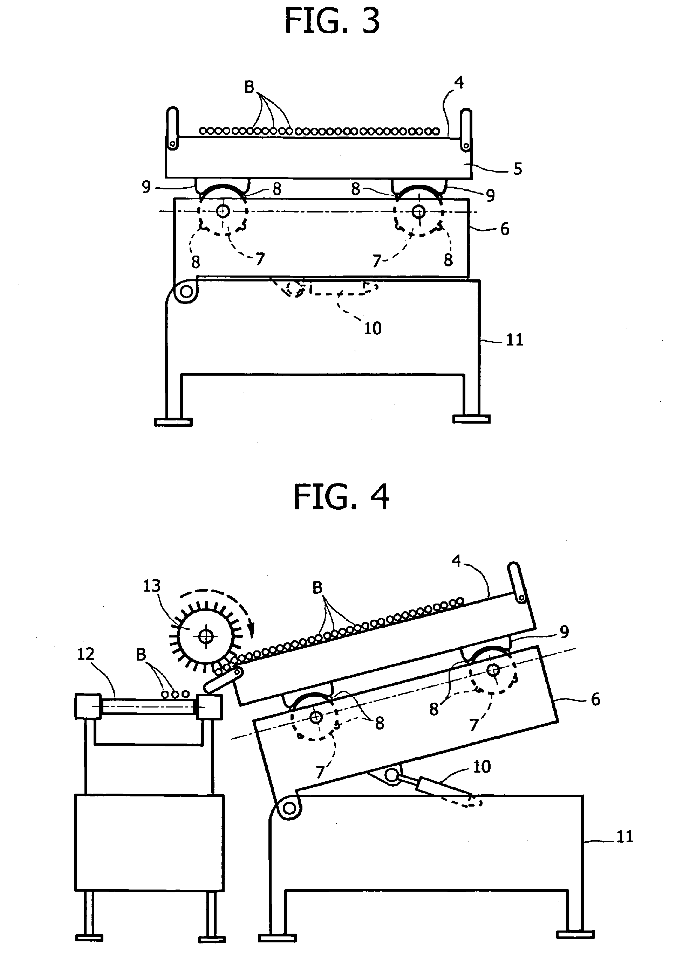

Figure 3 shows the flattened condition of the bars obtained as a result of the activation of the vibration actuating rollers 7. At this time, the supporting structure 6 can be inclined, for example by means of an actuating cylinder 10 of the type diagrammatically shown in figure 4, with respect to the base structure 11, so as to discharge the bars B by gravity from wall 4 to a roller conveyor 12 which feeds the bars in a direction perpendicular to the plane of the figure up to an apparatus located downstream, typically a device for cutting the bars. The wall 4 is not necessary in form of a planar surface, but can also be in form of a concave surface, for example having a cradle-like profile, in order to render unlikely for the bars to become entangled again during their movement while the wall 4 and supporting structure 6 are inclined. It is to be noted that in cooperation with the inclination of the wall 4, a paddled wheel 13 is used for counting the bars, which enables the bars B to be fed in sequence to the roller conveyer 12, one by one, so that the number of the bars which are fed can be controlled, the supply of bars being interrupted when motor means which are associated with wheel 13 are switched off. The inclination of the structure 6 may be also substantially different from that shown in the drawing, which is only for clarity of illustration. It is also possible to provide an upper wall parallel and spaced apart from the wall 4 in order to guide the bars while they are falling and also to prevent them from becoming entangled.

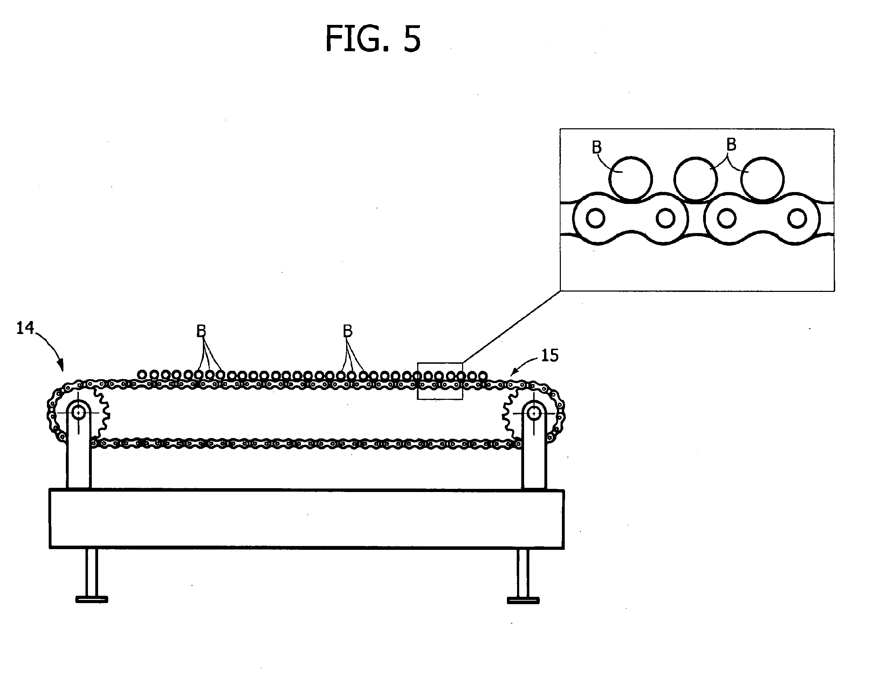

In lieu of wheel 13, it is also possible for instance to use a chain conveyer device 14 upstream of the roller conveyer 12, which comprises a number of endless chains 15 arranged in vertical planes which are parallel and spaced apart from each other, to support the bars B thereon. As it is shown in the detailed section at enlarged scale in figure 5, the shape of the chains 15 is such that each bar B is arranged on a corresponding plate of the chain, so as to be kept separate and spaced apart from the other bars. Therefore, with the aid of this conveyer device, the bars can be counted easily, for example with the aid of optical, or magnetic or mechanical sensors, such as micro-switch sensors associated to a movable arm which is displaced from the bars in motion, so that the number of bars fed downstream of the device is controlled.

As an alternative to the chain conveyer, one or more augers can be used, which are arranged along a direction transverse with respect to the longitudinal direction of the bars. The augers not only provide for moving and separating the bars B as in the case of the chain conveyers, but also they provide a reference for the position of the bars in their longitudinal direction. The same goal can be achieved also with the aid of screws with variable pitch which are able to move the bars and separate the bars from each other in proportion to the pitch of the screw.

Another system for picking up and counting the bars after they are disentangled is that described in Italian patent application T02001A000797 of the same Applicant.

As an alternative to inclining the supporting structure 6, it is also possible to provide, adjacent to the vibrating wall 4, at least one inclined surface which conveys the bars B, directly, or through the above-mentioned devices for automatically picking up and counting the bars, to the roller conveyer 12. Counting of the bars B can be carried out both directly while the bars are moved on the inclined surface or while the bars are located on the above mentioned devices, if these are provided. The problem exists of moving the bars from wall 4 to the inclined surface in an ordered sequence, without the bars becoming entangled, and keeping them spaced apart from each other even only by a very short distance. This object can be achieved, apart from by inclining the supporting structure 6 by a suitable angle, also by exploiting the vibrating movement of the wall 4 or by means of a pushing apparatus which is able to gently push the bars B, such as a pushing lever mechanism. In a preferred embodiment, because a simple vibrating movement would tend to widen the bundle not only in the direction of the inclined surface, but also in the opposite direction, a combination of the two above-described means can be adopted. In the spaces between the vibrating walls or at one or at both sides thereof there are provided lever means, which are articulated to the inclined surface on the closer side thereof, so that the end located on the opposite side is raised first. These levers could also be constituted by the cross-members 3 and would preferably have a concave profile, such as a cradle-like profile. The vibrating wall 4 will be activated with a gentle vibration, so that the bars are gently moved, while on the side opposite to the inclined surface the end of the lever will begin to slowly rise. Thus, the bars will be caused to widen and will be able to move only in the direction of the inclined surface and not in the opposite direction where they are stopped by the lever. While the lever will raise, the space which can be occupied by the bars on the side of wall 4 opposite to the inclined surface, is more and more limited, until the bars are compelled to move towards the inclined surface. The above-mentioned lever will gently push the bars, without entangling them, thanks to its cradle-like concave profile. By suitably adjusting the speed of the raising movement of the lever as a function of the diameter of bars B, their length and/or their mechanical properties, and the number of the bars B, it will be possible to determine the most suitable value to minimize the bar loading time while avoiding entangling of the bars, thus finding a compromise between using the lever only for limiting the space in which the bars are widened as a result of the vibrating movement of wall 4 and a more or less strong pushing action. Typically, the bars of greater diameter have less tendency to become entangled during the movement and can be loaded more rapidly. It is also possible to use only the cradle-like lever without activating the vibrating wall during the loading operation after that the bundle has been disentangled. In the operation of picking up and counting the bars, once the bundle has been disentangled, it is possible to active the vibrating wall 4 with a light vibration, while slightly inclining wall 4 itself and the supporting structure 6, since thanks to the vibrations, the inclination will not have to be such as to overcome the static friction.

Further systems for picking up and counting the bars B after that the bundle has been disentangled by using a wall 4 provided with vibrating means include magnetic means or gripper means.

Again, both the vibrating device associated with the bar supporting wall and the device for picking up and counting the bars as well also the device for feeding the bars to the downstream apparatus may have any configuration, also totally different from those shown in the annexed drawings by way of example. The downstream device which is served by the feeding units may be a bar cutting device as well as a bar bending device or anything else. Finally, the configuration of the magazine structure for the bars may be any. It is therefore possible to provide a number of magazines of the type shown in figure 1, and these magazines can be arranged in any way, for instance on a number of steps, in a way known per se, or according to any other configuration.

Naturally, while the principle of the invention remains the same, the details of construction and the embodiments may widely vary with respect to what has been described by way of example, without departing from the scope of the present invention, as defined by the claims.

## Claims

1. Plant for handling metal bars, particularly bars for concrete reinforcement, comprising at least one magazine (1) for the bars (B), a feeding unit (12) for feeding the bars from the magazine (1) to an operating apparatus, such as a bar measuring and cutting apparatus, and/or a bar bending apparatus, and means (10, 13) for feeding the bars from said magazine (1) to said feeding unit (12), said plant comprising at least one wall (4) for supporting the bars, which is provided with means for imparting a vibration thereto in order to enable the bars to be automatically picked up and counted, **characterised in that** said wall (4) is generally horizontal and activation of said vibration imparting means provides disentangling and widening, namely flattening, the bundle of bars located thereon to be fed to said feeding unit (12).

2. Plant according to claim 1, **characterised in that** said wall (4) provided with vibration imparting means is part of the bar collecting magazine.

3. Plant according to claim 1, **characterised in that** said wall (4) provided with vibration imparting means is located at an area of the plant adjacent to the bar collecting magazine.

4. Plant according to claim 1, **characterised in that** said bar feeding unit comprises a motorized roller conveyer (12).

5. Plant according to claims 2 or 3, **characterised in that** said wall (4) provided with vibration imparting means comprises one or more surfaces located substantially at the same level of further supports (3) forming part of the magazine (1).

6. Plant according to claims 2 or 3, **characterised in that** said wall (4) provided with vibration imparting means comprises one or more surfaces located at different levels.

7. Plant according to claims 1, 2 or 3, **characterised in that** said wall (4) has a concave profile.

8. Plant according to claim 1, **characterised in that** on the side of said roller conveyer (12) which constitutes the bar feeding unit opposite to that where said wall with vibration imparting means is located, there is arranged a bar collecting magazine of conventional type.

9. Plant according to claim 1, **characterised in that** the plant comprises means for automatically picking up the bars, said means including a system provided with at least one auger.

10. Plant according to claim 1, **characterised in that** it comprises means for automatically picking up the bars, said means comprising a system including at least one chain conveyer.

11. Plant according to claim 1, **characterised in that** it comprises means for automatically picking up the bars, said means including a system comprising at least one cam.

12. Plant according to claim 1, **characterised in that** it comprises means for automatically picking up the bars, said means including a system comprising at least one magnet.

13. Plant according to claim 1, **characterised in that** it comprises means for automatically picking up the bars, including a system comprising at least one gripping tool.

14. Plant according to claim 1, **characterised in that** it comprises means for automatically picking up the bars, said means including a system comprising at least one paddled wheel (13) for picking up and counting the bars.

15. Plant according to any of claims 9-14, **characterised in that** to the system for automatically picking up the bars there are associated means for counting bars.

16. Plant according to claim 1, **characterised in that** it comprises means for automatically picking up the bars, including means for inclining the bar supporting surface.

17. Plant according to claim 1, **characterised in that** the means for automatically picking up the bars include means comprising at least one movable lever for pushing the bars.

18. Plant according to claim 1, **characterised in that** said wall (4) provided with vibration imparting means is adapted to be inclined.

19. Plant according to claim 1, **characterised in that** said wall (4) provided with vibration imparting means is adjacent to at least one surface which is inclined or adapted to be inclined.

20. Plant according to claim 1 or 16 or 18, **characterised in that** it comprises means for automatically picking up the bars including means comprising at least one surface provided with one device for preventing the bars from becoming again entangled after that they have been separated.

21. Method for handling metal bars, particularly for concrete reinforcement, in a plant provided with at least one magazine (1) for the bars and a bar feeding unit (12) which feeds the bars from the magazine (1) to an operating apparatus, such as a bar measuring and cutting apparatus and/or a bar bending apparatus, wherein a bundle of bars is initially arranged on a support wall (4) of the magazine and said wall (4) is then subjected to a vibrating movement, **characterised in that** said vibrating movement provides disentangling and widening of said bundle on said wall (4) which is generally horizontal until the bundle of bars is horizontally flattened, said method preferably including also an operation of automatic pick up and counting of the bars after the bundle has been flattened and before said bars are fed to said feeding unit.

22. Plant according to claim 1, **characterised in that** it comprises means for automatically picking up the bars, including a system comprising at least one screw with variable pitch, for picking up the bars (B).

23. Plant according to claim 17, **characterised in that** said at least one lever has a concave profile.

24. Plant according to claim 17 or 23, **characterised** said at least one lever has a cradle-like profile.

25. Plant according to claim 1, **characterised in that** the intensity of the vibrations imparted by the vibration imparting means to said at least one wall (4) can be adjusted.

26. Plant according to claim 17, **characterised in that** there are provided means for controlling the speed of movement of this lever as a function of one or more of the following parameters: number of the bars (B), diameter of the bars (B), length of the bars (B), mechanical property of the bars (B).

27. Method according to claim 21, **characterised in that** once the bundle has been flattened, at least one lever is activated in order to facilitate the movement of bars (B) towards an apparatus for automatically picking up and counting the bars.

28. Method according to claim 27, **characterised in that** during the operation of said at least one lever, said at least one wall (4) is caused to vibrate with a low intensity of vibration.

29. Method according to claims 21 or 27, **characterised in that** after that the bundle has been flattened, the wall (4) is inclined.

30. Method according to claim 29, **characterised in that** while said at least one wall (4) is inclined, it is caused to vibrate at low intensity.

31. Method according to claim 27, **characterised in that** the movement of the bars to an apparatus for automatically picking up and counting the bars is obtained with the aid of at least one inclined surface.

32. Plant according to claim 1, **characterised in that** it includes pushing means for moving the bars from said at least one wall (4).

33. Plant according to claim 32, **characterised in that** said pushing means are activated after that the bundle has been disentangled and flattened.

34. Plant according to claim 32 or 33, **characterised in that** said pushing means are activated while the vibrating means are active.

35. Plant according to claim 1, **characterised in that** it comprises means for automatically picking up the bars, including a system provided with a wheel having notches.

36. Plant according to any of claim 1-20 and 22-26 and 32-35, **characterised in that** to the system for automatically picking up the bars, there are associated means for counting the bars.

## Patentansprüche

1. Anlage für das Manipulieren von Metallstangen, im Besonderen von Stangen zum Bewehren von Beton, wobei die Anlage zumindest ein Magazin (1) für die Stangen (B), eine Zuführeinheit (12), um die Stangen vom Magazin (1) einer Bearbeitungsvorrichtung zuzuführen, beispielsweise einer Mess- und Schneideeinrichtung für die Stangen und/oder einer Biegeeinrichtung für die Stangen, sowie eine Einrichtung (10, 13) enthält, um die Stangen vom Magazin (1) zur Zuführeinrichtung (12) zu transportieren, wobei die Anlage zumindest eine Wand (4) zum Halten der Stangen enthält, die mit einer Einrichtung versehen ist, die der Wand Vibrationen aufprägt, um die Stangen automatisch aufnehmen und abzählen zu können, **dadurch gekennzeichnet, dass** die Wand (4) im Allgemeinen horizontal verläuft und ein Inbetriebsetzen der Einrichtung, mit der die Vibrationen aufgeprägt werden, ein Entwirren und Aufweiten, d.h. ein Einebnen, des Bündels von Stangen liefert, die darauf angeordnet sind, um der Zuführeinheit (12) zugeführt zu werden.

2. Anlage gemäß Anspruch 1, **dadurch gekennzeichnet, dass** die Wand (4), die mit einer Einrichtung zum Aufprägen von Vibrationen versehen ist, Teil des Sammelmagazins für die Stangen ist.

3. Anlage gemäß Anspruch 1, **dadurch gekennzeichnet, dass** die Wand (4), die mit einer Einrichtung zum Aufprägen von Vibrationen versehen ist, in einem Bereich der Anlage neben dem Sammelmagazin für die Stangen angeordnet ist.

4. Anlage gemäß Anspruch 1, **dadurch gekennzeichnet, dass** die Zuführeinheit für die Stangen einen motorgetriebenen Rollenförderer (12) enthält.

5. Anlage gemäß Anspruch 2 oder 3, **dadurch gekennzeichnet, dass** die Wand (4), die mit einer Einrichtung zum Aufprägen von Vibrationen versehen ist, eine oder mehrere Flächen enthält, die im Wesentlichen auf dem selben Niveau von weiteren Halterungen (3) angeordnet ist, die Teil des Magazins (1) sind.

6. Anlage gemäß Anspruch 2 oder 3, **dadurch gekennzeichnet, dass** die Wand, die mit einer Einrichtung zum Aufprägen von Vibrationen versehen ist, eine oder mehrere Flächen enthält, die auf unterschiedlichen Niveaus angeordnet sind.

7. Anlage gemäß Anspruch 1, 2 oder 3, **dadurch gekennzeichnet, dass** die Wand (4) ein konkaves Profil besitzt.

8. Anlage gemäß Anspruch 1, **dadurch gekennzeichnet, dass** auf der Seite des Rollenförderers (12), der die Zuführeinheit für die Stangen bildet, die gegenüber jener Seite liegt, auf der die Einrichtung angeordnet ist, mit der der Wand Vibrationen aufgeprägt werden, ein Sammelmagazin für die Stangen angeordnet ist, das einen herkömmlichen Aufbau besitzt.

9. Anlage gemäß Anspruch 1, **dadurch gekennzeichnet, dass** die Anlage eine Einrichtung zum automatischen Aufnehmen der Stangen enthält, wobei diese Einrichtung ein System aufweist, das mit zumindest einer Förderschnecke versehen ist.

10. Anlage gemäß Anspruch 1, **dadurch gekennzeichnet, dass** die Anlage eine Einrichtung zum automatischen Aufnehmen der Stangen enthält, wobei diese Einrichtung ein System enthält, das zumindest einen Kettenförderer aufweist.

11. Anlage gemäß Anspruch 1, **dadurch gekennzeichnet, dass** die Anlage eine Einrichtung zum automatischen Aufnehmen der Stangen enthält, wobei diese Einrichtung ein System aufweist, das zumindest einen Nockenförderer enthält.

12. Anlage gemäß Anspruch 1, **dadurch gekennzeichnet, dass** die Anlage eine Einrichtung zum automatischen Aufnehmen der Stangen enthält, wobei diese Einrichtung ein System aufweist, das zumindest einen Magnet enthält.

13. Anlage gemäß Anspruch 1, **dadurch gekennzeichnet, dass** die Anlage eine Einrichtung zum automatischen Aufnehmen der Stangen enthält, die ein System aufweist, das zumindest ein Greifwerkzeug enthält.

14. Anlage gemäß Anspruch 1, **dadurch gekennzeichnet, dass** die Anlage eine Einrichtung zum automatischen Aufnehmen der Stangen enthält, wobei diese Einrichtung ein System aufweist, das zumindest ein Schaufelrad (13) enthält, um die Stangen aufzunehmen und abzuzählen.

15. Anlage gemäß irgendeinem der Ansprüche 9 bis 14, **dadurch gekennzeichnet, dass** dem System zum automatischen Aufnehmen der Stangen eine Einrichtung zugeordnet ist, um die Stangen abzuzählen.

16. Anlage gemäß Anspruch 1, **dadurch gekennzeichnet, dass** die Anlage eine Einrichtung zum automatischen Aufnehmen der Stangen enthält, die eine Einrichtung zum Neigen der Ebene aufweist, die die Stangen trägt.

17. Anlage gemäß Anspruch 1, **dadurch gekennzeichnet, dass** die Einrichtung zum automatischen Aufnehmen der Stangen eine Einrichtung aufweist, die zumindest einen bewegbaren Hebel zum Anstoßen der Stangen enthält.

18. Anlage gemäß Anspruch 1, **dadurch gekennzeichnet, dass** die Wand (4), die mit einer Einrichtung zum Aufprägen von Vibrationen versehen ist, so aufgebaut ist, dass sie geneigt werden kann.

19. Anlage gemäß Anspruch 1, **dadurch gekennzeichnet, dass** die Wand (4), die mit einer Einrichtung zum Aufprägen von Vibrationen versehen ist, neben der zumindest einen Fläche liegt, die geneigt wird oder die so aufgebaut ist, dass sie geneigt werden kann.

20. Anlage gemäß Anspruch 1 oder 16 oder 18, **dadurch gekennzeichnet, dass** die Anlage eine Einrichtung zum automatischen Aufnehmen der Stangen enthält, die eine Einrichtung aufweist, die zumindest eine Fläche enthält, die mit einer Einrichtung versehen ist, um zu verhindern, dass sich die Stangen wieder verstricken, nachdem sie getrennt wurden.

21. Verfahren zum Manipulieren von Metallstangen, im Besonderen für die Bewehrung von Beton, in einer Anlage, die mit zumindest einem Magazin (1) für die Stangen sowie mit einer Zuführeinheit für die Stangen (12) ausgestattet ist, mit der die Stangen vom Magazin (1) einer Bearbeitungsvorrichtung zugeführt werden, beispielsweise einer Mess- und Schneideeinrichtung für die Stangen und/oder einer Biegeeinrichtung für die Stangen, wobei ein Bündel von Stangen anfangs auf einer Tragwand (4) des Magazins angeordnet ist, und wobei diese Wand (4) dann einer Vibrationsbewegung unterworfen wird, **dadurch gekennzeichnet, dass** die Vibrationsbewegung ein Entwirren und Aufweiten des Bündels auf der Wand (4), die im Allgemeinen horizontal verläuft, liefert, bis das Bündel von Stangen horizontal eingeebnet ist, wobei das Verfahren vorzugsweise auch einen Vorgang aufweist, bei dem die Stangen automatisch aufgenommen und abgezählt werden, nachdem das Bündel eingeebnet wurde und bevor die Stangen der Zuführeinheit zugeführt werden.

22. Anlage gemäß Anspruch 1, **dadurch gekennzeichnet, dass** die Anlage eine Einrichtung zum automatischen Aufnehmen der Stangen enthält, die ein System aufweist, das zumindest eine Förderschnecke mit variabler Steigung enthält, um die Stangen (B) aufzunehmen.

23. Anlage gemäß Anspruch 17, **dadurch gekennzeichnet, dass** der zumindest eine Hebel ein konkaves Profil besitzt.

24. Anlage gemäß Anspruch 17 oder 23, **dadurch gekennzeichnet, dass** der zumindest eine Hebel ein wiegenartiges Profil besitzt.

25. Anlage gemäß Anspruch 1, **dadurch gekennzeichnet, dass** die Stärke der Vibrationen, die von der Einrichtung zum Aufprägen von Vibrationen der zumindest einen Wand (4) aufgeprägt werden, eingestellt werden kann.

26. Anlage gemäß Anspruch 17, **dadurch gekennzeichnet, dass** eine Einrichtung vorgesehen ist, um die Geschwindigkeit der Bewegung dieses Hebels als Funktion von einem oder mehreren der folgenden Parameter zu steuern: der Anzahl der Stangen (B), dem Durchmesser der Stangen (B), der Länge der Stangen (B), den mechanischen Eigenschaften der Stangen (B).

27. Verfahren gemäß Anspruch 21, **dadurch gekennzeichnet, dass** dann, wenn das Bündel einmal eingeebnet ist, zumindest ein Hebel in Betrieb gesetzt wird, um die Bewegung der Stangen (B) zu einer Einrichtung zu erleichtern, mit der die Stangen automatisch aufgenommen und abgezählt werden.

28. Verfahren gemäß Anspruch 27, **dadurch gekennzeichnet, dass** während des Betriebs des zumindest einen Hebels die zumindest eine Wand (4) Vibration ausgesetzt wird, die eine geringe Stärke besitzen.

29. Verfahren gemäß den Ansprüchen 21 oder 27, **dadurch gekennzeichnet, dass** die Wand (4) geneigt wird, nachdem das Bündel eingeebnet wurde.

30. Verfahren gemäß Anspruch 29, **dadurch gekennzeichnet, dass** die zumindest eine Wand (4), während sie geneigt ist, Vibrationen ausgesetzt wird, die eine geringe Stärke besitzen.

31. Verfahren gemäß Anspruch 27, **dadurch gekennzeichnet, dass** man die Bewegung der Stangen zu einer Einrichtung zum automatischen Aufnehmen und Abzählen der Stangen mit Hilfe der zumindest einen geneigten Fläche erhält.

32. Anlage gemäß Anspruch 1, **dadurch gekennzeichnet, dass** die Anlage eine Anstoßeinrichtung aufweist, um die Stangen von der zumindest einen Wand (4) zu bewegen.

33. Anlage gemäß Anspruch 32, **dadurch gekennzeichnet, dass** die Anstoßeinrichtung in Betrieb gesetzt wird, nachdem das Bündel entwirrt und eingeebnet wurde.

34. Anlage gemäß Anspruch 32 oder 33, **dadurch gekennzeichnet, dass** die Anstoßeinrichtung in Betrieb gesetzt wird, während die Vibrationseinrichtung in Betrieb steht.

35. Anlage gemäß Anspruch 1, **dadurch gekennzeichnet, dass** die Anlage eine Einrichtung zum automatischen Aufnehmen der Stangen enthält, die ein System enthält, das mit einem Rad ausgestattet ist, das Einkerbungen besitzt.

36. Anlage gemäß Anspruch 1 bis 20 und 22 bis 26 und 32 bis 35, **dadurch gekennzeichnet, dass** dem System zum automatischen Aufnehmen der Stangen eine Einrichtung zum Abzählen der Stangen zugeordnet ist.

## Revendications

1. Installation pour manipuler des barres métalliques, en particulier des barres pour le renforcement du béton, comprenant au moins un magasin (1) pour les barres (B), une unité d'alimentation (12) pour acheminer les barres du magasin (1) jusqu'à un dispositif en service, tel qu'un dispositif de mesure et de découpe des barres et/ou un dispositif de cintrage des barres, et des moyens (10, 13) pour acheminer les barres dudit magasin (1) à ladite unité d'alimentation (12), ladite installation comprenant au moins une paroi (4) pour soutenir les barres, laquelle est pourvue de moyens pour imprimer une vibration à celle-ci afin de permettre que les barres soient ramassées automatiquement et comptées, **caractérisée en ce que** ladite paroi (4) est généralement horizontale et l'activation desdits moyens pour imprimer une vibration permet de désenchevêtrer et d'élargir, notamment d'aplatir, le paquet de barres situées sur celle-ci et destinées à alimenter ladite unité d'alimentation (12).

2. Installation selon la revendication 1, **caractérisée en ce que** ladite paroi (4) pourvue de moyens imprimant une vibration fait partie du magasin de collecte des barres.

3. Installation selon la revendication 1, **caractérisée en ce que** ladite paroi (4) pourvue de moyens imprimant une vibration se trouve dans une zone de l'installation adjacente au magasin de collecte des barres.

4. Installation selon la revendication 1, **caractérisée en ce que** ladite unité d'alimentation en barres comprend un transporteur à rouleaux motorisé (12).

5. Installation selon la revendication 2 ou 3, **caractérisée en ce que** ladite paroi (4) pourvue de moyens imprimant une vibration comprend une ou plusieurs surfaces situées sensiblement au même niveau que des supports supplémentaires (3) faisant partie du magasin (1).

6. Installation selon la revendication 2 ou 3, **caractérisée en ce que** ladite paroi (4) pourvue de moyens imprimant une vibration comprend une ou plusieurs surfaces situées à des niveaux différents.

7. Installation selon les revendications 1, 2 ou 3, **caractérisée en ce que** ladite paroi (4) a un profil concave.

8. Installation selon la revendication 1, **caractérisée en ce que** sur le côté dudit transporteur à rouleaux (12) qui constitue l'unité d'alimentation en barres opposé à celui où se trouve ladite paroi dotée de moyens imprimant une vibration, est agencé un magasin de collecte des barres de type classique.

9. Installation selon la revendication 1, **caractérisée en ce que** l'installation comprend des moyens pour ramasser automatiquement les barres, lesdits moyens comprenant un système pourvu d'au moins une vis sans fin.

10. Installation selon la revendication 1, **caractérisée en ce qu'**elle comprend des moyens pour ramasser automatiquement les barres, lesdits moyens comprenant un système comportant au moins un transporteur à chaîne.

11. Installation selon la revendication 1, **caractérisée en ce qu'**elle comprend des moyens pour ramasser automatiquement les barres, lesdits moyens comprenant un système comportant au moins une came.

12. Installation selon la revendication 1, **caractérisée en ce qu'**elle comprend des moyens pour ramasser automatiquement les barres, lesdits moyens comprenant un système comportant au moins un aimant.

13. Installation selon la revendication 1, **caractérisée en ce qu'**elle comprend des moyens pour ramasser automatiquement les barres, comprenant un système comportant au moins un outil de préhension.

14. Installation selon la revendication 1, **caractérisée en ce qu'**elle comprend des moyens pour ramasser automatiquement les barres, lesdits moyens comprenant un système comportant au moins une roue à ailettes (13) pour ramasser et compter les barres.

15. Installation selon l'une quelconque des revendications 9 à 14, **caractérisée en ce qu'**au système pour ramasser automatiquement les barres sont associés des moyens pour compter les barres.

16. Installation selon la revendication 1, **caractérisée en ce qu'**elle comprend des moyens pour ramasser automatiquement les barres, comprenant des moyens pour incliner la surface soutenant les barres.

17. Installation selon la revendication 1, **caractérisée en ce que** les moyens pour ramasser automatiquement les barres comprennent des moyens comportant au moins un levier mobile pour pousser les barres.

18. Installation selon la revendication 1, **caractérisée en ce que** ladite paroi (4) pourvue de moyens imprimant une vibration est apte à être inclinée.

19. Installation selon la revendication 1, **caractérisée en ce que** ladite paroi (4) pourvue de moyens imprimant une vibration est adjacente à au moins une surface qui est inclinée ou apte à être inclinée.

20. Installation selon la revendication 1 ou 16 ou 18, **caractérisée en ce qu'**elle comprend des moyens pour ramasser automatiquement les barres, comprenant des moyens comportant au moins une surface pourvue d'un dispositif pour empêcher que les barres ne s'enchevêtrent à nouveau après avoir été séparées.

21. Procédé pour manipuler des barres métalliques, en particulier pour le renforcement du béton, dans une installation pourvue d'au moins un magasin (1) pour les barres et d'une unité d'alimentation en barres (12) qui achemine les barres du magasin (1) à un dispositif en service, tel qu'un dispositif de mesure et de découpe des barres et/ou un dispositif de cintrage des barres, dans lequel un paquet de barres est initialement agencé sur une paroi de support (4) du magasin et ladite paroi (4) est ensuite soumise à un mouvement vibratoire, **caractérisé en ce que** ledit mouvement vibratoire permet de désenchevêtrer et d'élargir ledit paquet sur ladite paroi (4), laquelle est généralement horizontale, jusqu'à ce que le paquet de barres soit aplati horizontalement, ledit procédé comprenant de préférence également une opération de ramassage automatique et de comptage des barres après que le paquet a été aplati et avant que lesdites barres ne soient introduites dans ladite unité d'alimentation.

22. Installation selon la revendication 1, **caractérisée en ce qu'**elle comprend des moyens pour ramasser automatiquement les barres, comprenant un système comportant au moins une vis de pas variable, pour ramasser les barres (B).

23. Installation selon la revendication 17, **caractérisée en ce que** ledit au moins un levier a un profil concave.

24. Installation selon la revendication 17 ou 23, **caractérisée en ce que** ledit au moins un levier a un profil en berceau.

25. Installation selon la revendication 1, **caractérisée en ce que** l'intensité des vibrations imprimées par les moyens imprimant une vibration à ladite au moins une paroi (4) peut être réglée.

26. Installation selon la revendication 17, **caractérisée en ce qu'**il est prévu des moyens pour contrôler la vitesse de déplacement de ce levier en fonction d'un ou plusieurs des paramètres suivants : nombre de barres (B), diamètre des barres (B), longueur des barres (B), propriété mécanique des barres (B).

27. Procédé selon la revendication 21, **caractérisé en ce que,** une fois que le paquet a été aplati, au moins un levier est activé afin de faciliter le déplacement des barres (B) vers un dispositif pour ramasser et compter automatiquement les barres.

28. Procédé selon la revendication 27, **caractérisé en ce que,** pendant le fonctionnement dudit au moins un levier, ladite au moins une paroi (4) est amenée à vibrer avec une faible intensité de vibration.

29. Procédé selon la revendication 21 ou 27, **caractérisé en ce que,** une fois que le paquet a été aplati, la paroi (4) est inclinée.

30. Procédé selon la revendication 29, **caractérisé en ce que**, pendant que ladite au moins une paroi (4) est inclinée, elle est amenée à vibrer à faible intensité.

31. Procédé selon la revendication 27, **caractérisé en ce que** le déplacement des barres vers un dispositif pour ramasser automatiquement et compter les barres est obtenu à l'aide d'au moins une surface inclinée.

32. Installation selon la revendication 1, **caractérisée en ce qu'**elle comprend des moyens pousseurs pour déplacer les barres à partir de ladite au moins une paroi (4).

33. Installation selon la revendication 32, **caractérisée en ce que** lesdits moyens pousseurs sont activés après que le paquet a été désenchevêtré et aplati.

34. Installation selon la revendication 32 ou 33, **caractérisée en ce que** lesdits moyens pousseurs sont activés pendant que les moyens vibrants sont actifs.

35. Installation selon la revendication 1, **caractérisée en ce qu'**elle comprend des moyens pour ramasser automatiquement les barres, comprenant un système pourvu d'une roue ayant des encoches.

36. Installation selon l'une quelconque des revendications 1 à 20 et 22 à 26 et 32 à 35, **caractérisée en ce que**, au système pour ramasser automatiquement les barres sont associés des moyens pour compter les barres.
